# EUROPEAN PATENT APPLICATION

(11) **EP 4 686 556 A1**
(43) Date of publication of application: **04.02.2026**
(21) Application number: 25188353.4
(22) Date of filing: 09.07.2025
(51) Int. Cl.: B30B 3/04, B21B 37/58, D21G 1/00, H01M 4/04

(54) **ROLL PRESS APPARATUS FOR MANUFACTURING ELECTRODE PLATES**

(30) Priority: 31.07.2024 KR 20240102085
(71) Applicant: SAMSUNG SDI CO., LTD., Yongin-si, Gyeonggi-do 17084 (KR)
(72) Inventor: Kim, Hyunwoo, Yongin-si, Gyeonggi-do 17084 (KR)
(74) Representative: Michalski Hüttermann & Partner Patentanwälte mbB

(57) **Abstract**

A roll press apparatus for manufacturing electrode plates includes a frame, a first pressure roller rotatably supported by the frame part and configured to apply pressure to a first surface of an electrode plate, a first electromagnet provided in the first pressure roller, a second pressure roller rotatably supported by the frame and configured to apply pressure to a second surface of the electrode plate, and a second electromagnet provided in the second pressure roller. A driver is configured to provide a rotational driving force to the first pressure roller and the second pressure roller. A distance sensor is configured to sense a distance between the first pressure roller and the second pressure roller. A controller is configured to receive a signal from the distance sensor and vary a strength of magnetic force from the first electromagnet and the second electromagnet so that the distance between the first pressure roller and the second pressure roller is maintained.

## Description

### BACKGROUND OF THE INVENTION

### (a) Field of the Invention

The present disclosure relates to a roll press apparatus for manufacturing electrode plates capable of changing the installation state of a roller in accordance with the thickness of the electrode plates.

### (b) Description of the Related Art

In general, a roll press apparatus processes metal materials by passing the metal materials between two rotating rolls. A conventional roll press apparatus uses a hydraulic press to apply force and uses large rolls.

A method of controlling the amount of rolling in a roll press apparatus is to adjust the size of the gap between rolls or the force applying pressure using a hydraulic press. However, as the number of roll press operations increases, the gap between the rolls widens. Thus, a conventional roll press apparatus has a problem in that the gauge for measuring the press force is inaccurate, which thereby requires periodically checking the gap between the rolls during operation. In addition, when processing electrodes (e.g., positive electrodes) that require high compound density, a strong force is applied with a hydraulic press, which may cause the axis of the rolls to bend. As a result, there may be poor production due to uneven pressing of the electrodes.

### SUMMARY OF THE INVENTION

An embodiment of the present disclosure provides a roll press apparatus for manufacturing electrode plates, wherein an electromagnets are provided ins pressure rollers, with the electromagnet being capable of changing the distance between the pressure rollers using the strength of the magnetic force of the electromagnet.

The roll press apparatus for manufacturing electrode plates includes a frame, a first pressure roller supported by the frame part and configured to apply pressure to a first surface of an electrode plate, a first electromagnet provided in the first pressure roller, a second pressure roller rotatably supported by the frame and configured to apply pressure to a second surface of the electrode plate, a second electromagnet provided in the second pressure roller, a driver configured to provide a rotational driving force to the first pressure roller and the second pressure roller, a distance sensor configured to sense a distance between the first pressure roller and the second pressure roller, and a controller configured to receive a signal from the distance sensor and vary a strength of the magnetic force from the first electromagnet and the second electromagnet so that the distance between the first pressure roller and the second pressure roller is maintained.

The first pressure roller may be configured to be disposed in the width direction of the first surface of the electrode plate, and the first electromagnet is provided in a hole formed in the first pressure roller.

The second pressure roller may be configured to be disposed in the width direction of the second surface of the electrode plate, and the second electromagnet is provided in a hole formed in the second pressure roller.

The second electromagnet may be cylindrically shaped.

The first pressure roller may be configured to be disposed in the width direction of the first surface of the electrode plate and the first electromagnet may be provided on an outer surface of the first pressure roller.

The first electromagnet may be ring shaped.

A plurality of the first electromagnets may be provided on the outer surface of the first pressure roller.

The second pressure roller may be configured to be disposed in the width direction of the second surface of the electrode plate, and the second electromagnet may be provided on an outer surface of the second pressure roller.

The second electromagnet may be ring d.

The second electromagnets may be provided on the outer surface of the second pressure roller.

The first pressure roller may be configured to be disposed in the width direction of the first surface of the electrode plate, and a plurality first electromagnets are positioned in holes formed in the first pressure roller.

The holes in the first pressure roller may be formed at radial positions around a center of the first pressure roller.

The second pressure roller may be configured to be disposed in the width direction of the second surface of the electrode plate, and the plurality of second electromagnets are positioned in holes formed in the second pressure roller.

The holes in the second pressure roller may be formed at radial positions are a center of the second pressure roller.

The first electromagnet and the second electromagnet are coil shaped and provided on outer surfaces of the first pressure roller and the second pressure roller, respectively.

The driver may include a driving motor providing the rotational driving force, and a belt member connected to a shaft of the driving motor and the first and second pressure rollers to transmit the rotational driving force from the driving motors to the first and second pressure rollers.

According to an embodiment of the present disclosure, by applying a magnetic force of an appropriate strength to an electromagnets provided with pressure rollers, it is possible to maintain the distance between the pressure rollers, thereby improving the manufacturing quality of the electrode plate.

According to an embodiment of the present disclosure, an electromagnet is provided in the length direction of a pressure roller and it is possible to apply pressure to the surface of an electrode plate more uniformly, thereby improving the manufacturing quality of the electrode plate.

### BRIEF DESCRIPTION OF THE DRAWINGS

FIG. 1 is a perspective view of a roll press apparatus for manufacturing electrode plates according to a first embodiment of the present disclosure.
FIG. 2 is a perspective view schematically illustrating a state in which a first pressure roller and a second pressure roller are provided with an electrode plate therebetween in the roll press apparatus for manufacturing electrode plates of FIG. 1.
FIG. 3 is a perspective view of a roll press apparatus for manufacturing electrode plates according to a second embodiment of the present disclosure.
FIG. 4 is a perspective view schematically illustrating a state in which a first pressure roller and a second pressure roller are provided with an electrode plate therebetween in the roll press apparatus for manufacturing electrode plates of FIG. 3.
FIG. 5 is a perspective view of a roll press apparatus for manufacturing electrode plates according to a third embodiment of the present disclosure.
FIG. 6 is a perspective view schematically illustrating a state in which a first pressure roller and a second pressure roller are provided with an electrode plate therebetween in the roll press apparatus for manufacturing electrode plates of FIG. 5.
FIG. 7 is a perspective view of a roll press apparatus for manufacturing electrode plates according to a fourth embodiment of the present disclosure.
FIG. 8 is a perspective view schematically illustrating a state in which a first pressure roller and a second pressure roller are provided with an electrode plate therebetween in the roll press apparatus for manufacturing electrode plates of FIG. 7.

### DETAILED DESCRIPTION OF THE EMBODIMENTS

The present disclosure will be described more fully hereinafter with reference to the accompanying drawings in which embodiments of the disclosure are shown. As those skilled in the art would realize, the described embodiments may be modified in various different ways without departing from the scope of the present disclosure. The drawings and description are to be regarded as illustrative in nature and not restrictive, and like reference numerals designate like elements throughout the specification.

A roll press apparatus for manufacturing electrode plates 100 described below refers to an apparatus that may be used to manufacture an electrode plate of a rechargeable battery by pressing the electrode plate to a predetermined thickness. The roll press apparatus for manufacturing electrode plates 100 will be described in detail below with reference to the drawings.

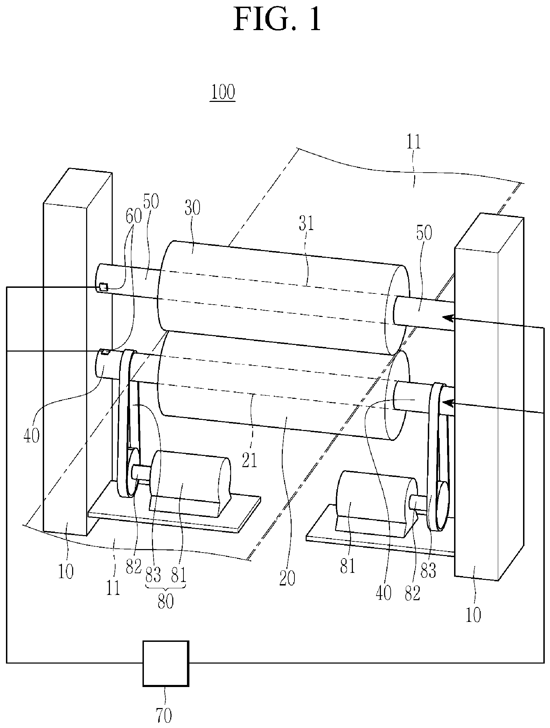

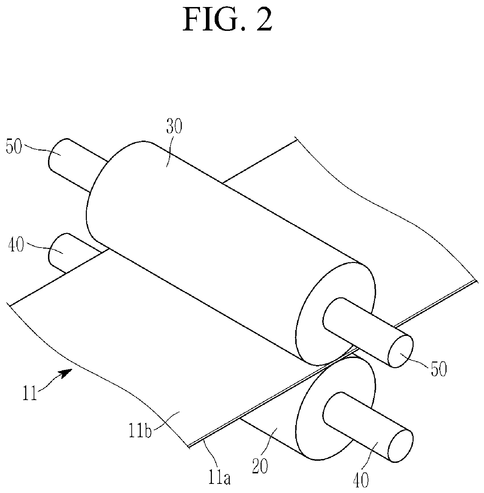

FIG. 1 is a perspective view of a roll press apparatus for manufacturing electrode plates according to a first embodiment of the present disclosure, and FIG. 2 is a perspective view schematically illustrating a state in which a first pressure roller and a second pressure roller are provided with an electrode plate therebetween in the roll press apparatus for manufacturing electrode plates of FIG. 1.

As shown in FIGS. 1 and 2, the roll press apparatus for manufacturing electrode plates 100 according to the first embodiment of the present disclosure includes a first pressure roller 20 for pressurizing a first surface 11a of an electrode plate 11. A first electromagnet 40 is provided inside the first pressure roller 20. A second pressure roller 30 for pressurizing a second surface 11b of the electrode plate 11. A second electromagnet 50 is provided inside the second pressure roller 30. A distance sensor 60 is provided to sense a distance between the first pressure roller 20 and the second pressure roller 30. A controller 70 receives a signal from the distance sensor 60 and varies the strength of the magnetic force of the first electromagnet 40 and the second electromagnet 50 so that the distance between the first pressure roller 20 and the second pressure roller 30 is maintained at a predetermined distance. A driver 80 provides rotational driving force to the first pressure roller 20 and the second pressure roller 30.

The frame part 10 is installed on the bottom surface of the work space, and the first pressure roller 20 and the second pressure roller 30 may be rotatably supported by the frame part 10. In particular, the frame part 10 may be installed on a floor of the work space with a space in which the second pressure roller 30 is rotatably supported by the first pressure roller 20. Both ends of the first pressure roller 20 and the second pressure roller 30 may be rotatably supported by the frame part 10.

The first pressure roller 20 is rotated by the driving force of the driver 80 while supporting the first surface 11a of the electrode plate 11. The first pressure roller 20 has a long length in the width direction of the first surface 11a of the electrode plate 11. The first pressure roller may apply pressure to and support the first surface 11a of the electrode plate 11 while being maintained at a predetermined distance from the second pressure roller 30.

The first electromagnet 40 may be installed inside the first pressure roller 20. In the depicted example, the first electromagnet 40 is provided in a hole 21 that is formed in the first pressure roller 20. The first electromagnet 40 has a cylindrical shape and may be provided at a center of a diameter of the first pressure roller 20.

The first electromagnet 40 may apply pressure to the first surface 11a of the electrode plate 11 according to the application of magnetic force and provide a rotational axis function that supports the rotational state of the first pressure roller 20. The first electromagnet 40 may protrude from ends of the first pressure roller 20, with the protruding parts being inserted into the frame part 10.

The first electromagnet 40 is illustrated as being installed as a single unit with a length corresponding to the length of the first pressure roller 20. But the present disclosure is not necessarily limited to this embodiment. For example, the first electromagnet 40 may be provided as a plurality of units inside the first pressure roller 20.

This first electromagnet 40 generate a magnetic force set by the operation of the controller 70.

The second pressure roller 30 is rotated by the driving force of the driver 80while applying pressure to the second surface 11b of the electrode plate 11. The second pressure roller 30 has a long length in the width direction of the second surface 11b of the electrode plate 11 and have the same or a similar shape as the first pressure roller 20. The second pressure roller 30 may apply pressure to the second surface 11b of the electrode plate 11 while being maintained a predetermined distance from the first pressure roller 20.

The second electromagnet 50 may be installed inside the second pressure roller 30. In the depicted example, the second electromagnet 50 is provided in a hole 31 that is formed in the second pressure roller 30.

The second electromagnet 50 has a cylindrical shape and may be provided at a center diameter of the second pressure roller 30.

The second electromagnet 50 may apply pressure to the first surface 11a of the electrode plate 11 according to the application of magnetic force and provide a rotational axis function that supports the rotational state of the second pressure roller 30. The second electromagnet 50 may protrude from ends of the second pressure roller 30, with the protruding parts being inserted into the frame part 10.

The second electromagnet 50 is illustrated as being installed as a single unit with a length corresponding to the length of the second pressure roller 30. But the present disclosure is not limited to this embodiment. For example, the second electromagnet may be provided as a plurality of units inside the second pressure roller 30.

The distance sensor 60 may be configured to sense the distance between the first pressure roller 20 and the second pressure roller 30. The distance sensor 60 function to check whether the first pressure roller 20 and the second pressure roller 30 maintain an appropriate distance apart in response to the size of the electrode plate 11. The distance sensor 60 may be provided on one of the first electromagnet 40 or the second electromagnet 50. But the present disclosure not limited thereto and the distance sensor may be provided on each of the first electromagnet 40 and the second electromagnet 50. A signal from the distance sensor 60 may be transmitted to the controller 70.

The controller 70 may receive the sensing signal from the distance sensor 60 and then compare the thickness of the electrode plate 11 to be manufactured with the distance between the first pressure roller 20 and the second pressure roller 30. As such, the controller 70 may then control the distance between the first pressure roller 20 and the second pressure roller 30 to be an appropriate distance.

In some embodiments, the controller 70 may be operated manually to control the distance between the first pressure roller 20 and the second pressure roller 30 according to an operator's direction. Additionally or alternatively, the controller 70 may automatically adjust the distance between the first pressure roller 20 and the second pressure roller 30 in response to the thickness of the electrode plate 11 by a predetermined control program.

For example, the controller 70 may adjust the distance between the first and second pressure rollers 20 and 30 by varying the strength of the magnetic force applied to each of the first and second pressure rollers 20 and 30 according to the signal of the distance sensor 60.

The driver 80 provides a rotational driving force to the first pressure roller 20 and the second pressure roller 30. The driver 80 may include a driving motor 81 generating the rotational driving force, with a driving belt 83 being connected to a rotational shaft 82 of the driving motor 81 and to the first and/or second electromagnets 40 and 50 of the first and second pressure rollers 20 and 30. As such, the first and second electromagnets may function as rotational shafts for the first and second pressure rollers 20 and 30.

The driving motor 81 may be provided inside and outside the frame part 10 and may be driven manually or remotely according to the operator's control. The rotational driving force of the driving motor 81 may be transmitted to the first and second pressure rollers 20 and 30 by the driving belt 83 to ensure proper rotational operation of the first and second pressure rollers 20 and 30. The electrode plates may thereby be made smooth and have a predetermined thickness.

The driving belt 83 is connected between the rotational shaft 82 of the driving motor 81 and the parts of first and/or second electromagnets 40 and 50 the protrude outside of the first/second pressure rollers 20 and 30. The connection provided by the driving belt 83 is such that the rotational driving force of the driving motor 81 is stably transmitted to the first and second pressure rollers 20 and 30.

As described above, the roll press apparatus for manufacturing electrode plates 100 of the present embodiment applies a magnetic force of a strength to the first/second electromagnets 40 and 50 based on the thickness of the electrode plate 11 to be pressed. Thus, a distance can be maintained between the first and second pressure rollers 20 and 30 corresponding to the electrode plate 11 thickness, which thereby improves the quality of the electrode plate being manufactured.

In addition, since the first and second electromagnets 40 and 50 are provided with a long length in the length direction of the first and second pressure rollers 20 and 30, it is possible to apply pressure to the surfaces of the electrode plate 11 more evenly, thereby further improving the quality of the electrode plate.

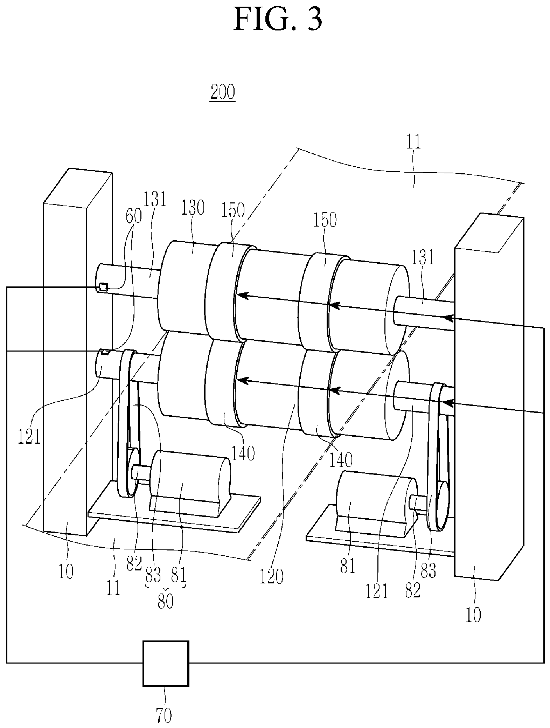

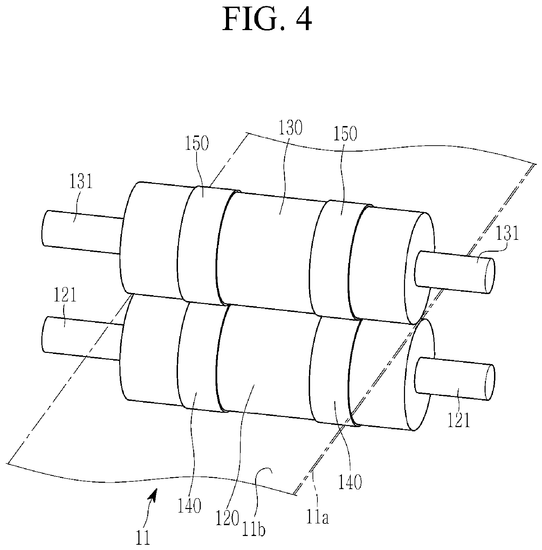

FIG. 3 is a perspective view of a roll press apparatus for manufacturing electrode plates according to a second embodiment of the present disclosure, and FIG. 4 is a perspective view schematically illustrating a state in which a first pressure roller and a second pressure roller are provided with an electrode plate therebetween in the roll press apparatus for manufacturing electrode plates of FIG. 3. The same reference numerals as in FIGS. 1 and 2 indicate the same or similar elements having the same or similar function.

As shown in FIGS. 3 and 4, the first pressure roller 120 of a roll press apparatus for manufacturing electrode plates 200 according to the second embodiment of the present disclosure may be disposed in the width direction of the first surface of the electrode plate 11. A first electromagnet 140 on an exterior of the first pressure roller 120. The first pressure roller 120 is rotated by the driving force of the driver 80while supporting the first surface 11a of the electrode plate 11.

A first rotational axis 121 of the first pressure roller 120 is positioned at a center of rotation, and the first pressure roller 120 may be rotatably supported by the frame part 10.

The first electromagnet 140 may be affixed to the outside of the first pressure roller 120. In a specific example, a plurality of first electromagnets 140 are provided in a ring shape on the outside of the first pressure roller 120, and a magnetic force set by the operation of the controller 70 may be generated by the first electromagnets.
A second pressure roller 130 is rotatably installed by the driving force of the driver 80 and may rotated by the driving force of the driver 80 while supporting the second surface 11b of the electrode plate 11. A second rotational axis 131 of the second pressure roller 130 is positioned at the center of rotation, and the second pressure roller 130 may be rotatably supported on the frame part 10.

A second electromagnet 150 may affixed to the outside of the second pressure roller 130. In a specific example, a plurality of second electromagnets 150 are in a ring shape on the outside of the second pressure roller 130, and a magnetic force set by the operation of the controller 70 may be generated by the second electromagnets.

The number of second electromagnets 150 may be the same as the number of first electromagnets. The second electromagnets 150 may be the same or similar shape as the first electromagnets 140.

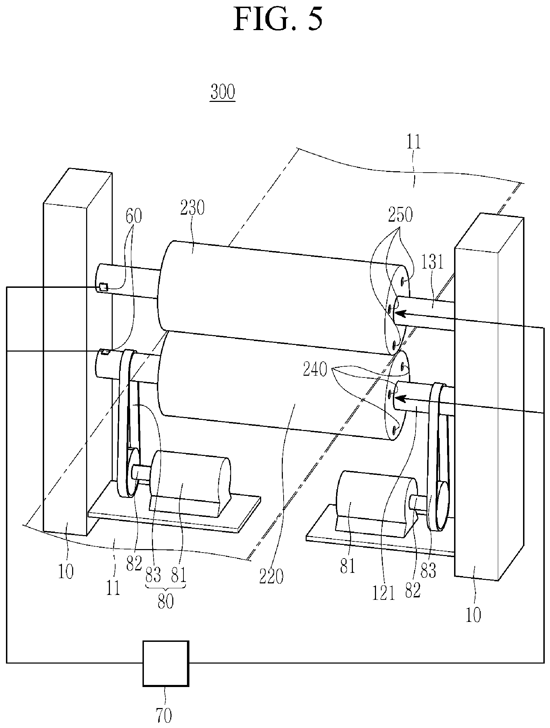

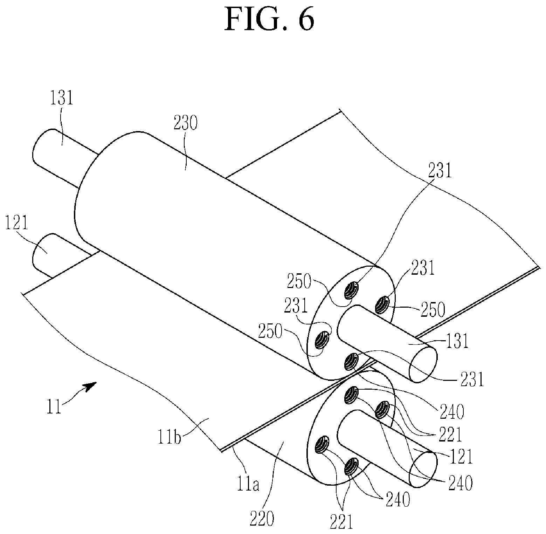

FIG. 5 is a perspective view of a roll press apparatus for manufacturing electrode plates according to a third embodiment of the present disclosure, and FIG. 6 is a perspective view schematically illustrating a state in which a first pressure roller and a second pressure roller are provided with an electrode plate therebetween in the roll press apparatus for manufacturing electrode plates of FIG. 5. The same reference numerals as in FIGS. 1 to 4 indicate the same or similar elements having the same or similar function.

As shown in FIGS. 5 and 6, a first pressure roller 220 of a roll press apparatus for manufacturing electrode plates 300 according to the third embodiment of the present disclosure may be disposed in the width direction of the first surface 11a of the electrode plate 11 A plurality of first insertion holes 221 in which first electromagnets 240 are positioned are formed in the first pressure roller 220. The plurality first insertion holes 221 may be formed radially based on the center of a diameter of the first pressure roller 220. The first electromagnets 240 may be formed in cylindrical shapes, and a first electromagnet 240 may be provided inside each of the plurality of first insertion holes 221.

A second pressure roller 230 may be disposed in the width direction of the second surface 11b of the electrode plate 11. A plurality of first insertion holes 231 in which second electromagnets 250 are positioned are formed in the second pressure roller 230. The plurality of second insertion holes 231 may be formed radially based on the center of a diameter of the second pressure roller 230. The second insertion holes 231 may be formed in the same number as the number of first insertion holes 221 in the first pressure roller 220. The second electromagnets 250 may be formed in cylindrical shapes, and a second electromagnet may be positioned inside each of the plurality of first insertion holes 231.

Accordingly, the strength of the magnetic force of the first/second pressure rollers 220 and 230 is further increased by the plurality of first/second electromagnets 240 and 250, thereby enabling a more stable plate roll press manufacturing process to be carried out.

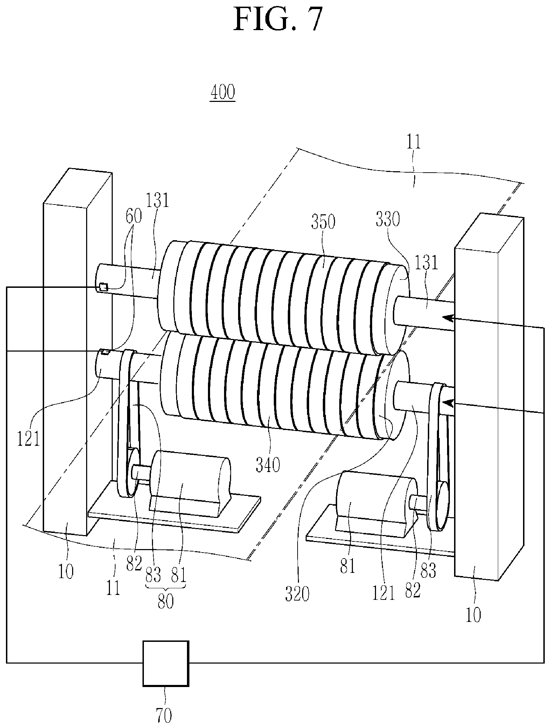

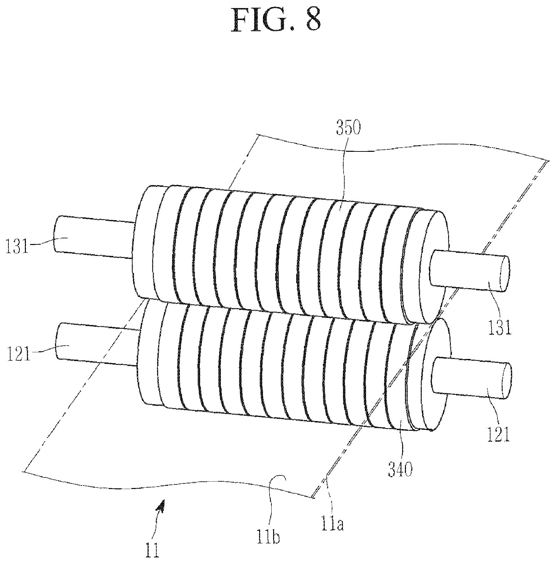

FIG. 7 is a perspective view of a roll press apparatus for manufacturing electrode plates according to a fourth embodiment of the present disclosure, FIG. 8 is a perspective view of a state in which a first pressure roller and a second pressure roller are provided with an electrode plate therebetween in the roll press apparatus for manufacturing electrode plates of FIG. 7. The same reference numerals as in FIGS. 1 to 6 indicate the same or similar elements having the same or similar function.

As shown in FIGS. 7 and 8, a first electromagnet 340 and a second electromagnet 350 of a roll press apparatus for manufacturing electrode plates 400 according to the fourth embodiment of the present disclosure may be provided in a coil shape on the outer surfaces of a first pressure roller 320 and a second pressure roller 330. As such, the first electromagnet 340 and the second electromagnet 350 cover the outer surfaces of the first pressure roller 320 and the second pressure roller 330. Thus, a sufficient magnetic force may be applied during the roll press manufacturing process of the electrode plates, thereby providing a smoother electrode plate.

While the embodiments of the present disclosure have been described in detail, it is to be understood that the disclosure is not limited to the disclosed embodiments. The present disclosure covers various modifications and equivalent arrangements.

### <Description of symbols>

10...Frame part 20, 120, 220, 320...First pressure roller
30, 130, 230, 330...Second pressure roller 40...First electromagnet
50, 150, 250, 350...Second pressure roller 60... Distance sensor
70... Controller 80... Driver
81...Driving motor 83... Driving belt

## Claims

1. A roll press apparatus for manufacturing electrode plates, the roll press apparatus comprising:
a frame (10);
a first pressure roller (20, 120, 220, 320) rotatably supported by the frame (10) and configured to apply pressure to a first surface (11a) of an electrode plate (11);
a first electromagnet (40, 140, 240, 340) provided in the first pressure roller (20, 120, 220, 320);
a second pressure roller (30, 130, 230, 330) rotatably supported by the frame (10) and configured to apply pressure to a second surface (11b) of the electrode plate (11);
a second electromagnet (50, 150, 250, 350) provided in the second pressure roller (30, 130, 230, 330);
a driver (80) configured to provide a rotational driving force to the first pressure roller (20, 120, 220, 320) and the second pressure roller (30, 130, 230, 330);
a distance sensor (60) configured to sense a distance between the first pressure roller (20, 120, 220, 320) and the second pressure roller (30, 130, 230, 330); and
a controller (70) configured to receive a signal from the distance sensor (60) and configured to vary a strength of magnetic force from the first electromagnet (40, 140, 240, 340) and the second electromagnet (50, 150, 250, 350) so that the distance between the first pressure roller (20, 120, 220, 320) and the second pressure roller (30, 130, 230, 330) is maintained.

2. The roll press apparatus as claimed in claim 1, wherein the first pressure roller (20) is configured to be disposed in the width direction of the first surface (11a) of the electrode plate (11), and
wherein the first electromagnet (40) is provided in a hole (21) formed in the first pressure roller (20).

3. The roll press apparatus as claimed in claims 1 or 2, wherein the second pressure roller (30) is configured to be disposed in the width direction on the second surface (11b) of the electrode plate (11), and the second electromagnet (50) is provided in a hole (31) formed in the second pressure roller (30).

4. The roll press apparatus according to any of the previous claims, wherein the second electromagnet (50) is cylindrically shaped.

5. The roll press apparatus as claimed in claim 1, wherein the first pressure roller (120) is configured to be disposed in the width direction of the first surface (11a) of the electrode plate (11), and
wherein the first electromagnet (140) is provided on an outer surface of the first pressure roller (120).

6. The roll press apparatus as claimed in claim 5, wherein the first electromagnet (140) is ring shaped.

7. The roll press apparatus as claimed in claims 5 or 6, wherein a plurality of first electromagnets (140) are provided on the outer surface of the first pressure roller (120).

8. The roll press apparatus according to any of claims 5 to 7, , wherein the second pressure roller (130) is configured to be disposed in the width direction of the second surface (11b) of the electrode plate (11), and the second electromagnet (150) is provided on an outer surface of the second pressure roller (130).

9. The roll press apparatus as claimed in claim 8, wherein the second electromagnet (150) is a ring shaped.

10. The roll press apparatus as claimed in claims 8 or 9, wherein a plurality of second electromagnets (150) are provided on the outer surface of the second pressure roller (130).

11. The roll press apparatus as claimed in claim 1, wherein the first pressure roller (220) is configured to be disposed in the width direction of the first surface (11a) of the electrode plate (11), and
wherein a plurality of first electromagnets (240) are positioned in holes (221) formed in the first pressure roller (220).

12. The roll press apparatus as claimed in claim 11, wherein the second pressure roller (230) is configured to be disposed in the width direction of the second surface (11b) of the electrode plate (11), and
wherein a plurality of second electromagnets (250) are positioned in holes (231) formed in the second pressure roller (230).

13. The roll press apparatus as claimed in claims 11 or 12, wherein the holes (231) in the second pressure roller (230) are formed at radial positions around a center of the second pressure roller (230); and/or wherein the holes (221) in the first pressure roller (220) are formed at radial positions around a center of the first pressure roller (220).

14. The roll press apparatus as claimed in claim 1, wherein the first electromagnet (340) and the second electromagnet (350) are coil shaped and provided on outer surfaces of the first pressure roller (320) and the second pressure roller (330), respectively.

15. The roll press apparatus according to any of the previous claims, wherein the driver (80) comprises:
a driving motor (81) providing the rotational driving force; and
a belt member (83) connected to a shaft (82) of the driving motor (80) and the first and second pressure rollers (20, 120, 220, 320, 30, 130, 230, 330) to transmit the rotational driving force form the driving motor (81) to the first and second pressure rollers (20, 120, 220, 320, 30, 130, 230, 330).
